# EUROPÄISCHE PATENTANMELDUNG

(11) **EP 0 866 320 A1**
(43) Veröffentlichungstag der Anmeldung: **23.09.1998**
(21) Anmeldenummer: 98104615.4
(22) Anmeldetag: 13.03.1998
(51) Int. Cl.: G01F 11/40, B67D 3/02

(54) **Austragvorrichtung für Medien**

(30) Priorität: 21.03.1997 DE 19711791
(71) Anmelder: ING. ERICH PFEIFFER GMBH, 78315 Radolfzell (DE)
(72) Erfinder: Fuchs, Karl-Heinz, 78315 Radolfzell (DE); Käfer, Stefan, 78253 Eigeltingen (DE)
(74) Vertreter: Patentanwälte Ruff, Beier, Schöndorf und Mütschele

(57) **Zusammenfassung**

Eine Vorrichtung (1a) weist Mittel auf, um eine Dosierkammer (15a) aufgrund Gefälles zu füllen und danach durch Schließen eines Einlaßventiles (39a), durch Öffnen eines Auslaßventiles (40a) sowie durch Verkürzung der Dosierkammer (15a) mit Unterstützung eines Luftstromes in ein Auftraggefäß (80) zu entleeren, aus welchem das Medium durch Abnehmen ausgeschüttet werden kann. Dadurch kann bei einfacher Handhabung und Ausbildung eine sehr genaue Dosierung erzielt werden.

## Beschreibung

Die Erfindung betrifft eine Austragvorrichtung für nur ein oder mehrere Medien, von denen jedes pulverförmig, flüssig, pastös, gasförmig o. dgl. sein kann und insbesondere zur pharmazeutischen, kosmetischen oder ähnlichen Anwendung vorgesehen ist. Zweckmäßig ist die Austragvorrichtung einhändig zu tragen und dabei mit den Fingern derselben Hand für den Austrag zu betätigen. Die Austragvorrichtung kann vollständig aus Kunststoff bzw. Spritzgußteilen bestehen, so daß die Medien mit Metallteilen nicht in Berührung gelangen. Die Austragvorrichtung kann zur nachträglichen Befestigung an einem oder mehreren Medienspeichern ausgebildet sein oder mit dieser Speicheranordnung eine ggf. nur durch Zerstörung trennbare Baueinheit bilden.

Vorteilhaft können mit der Austragvorrichtung während eines einzigen Austragvorganges bzw. gleichzeitig zwei oder mehr gleit- oder fließfähige Medien gefördert bzw. ausgetragen und dabei innerhalb oder außerhalb der Vorrichtung miteinander vermischt werden. Als Erstmedium kann ein nicht gasförmiges Medium und als Zweitmedium ein leicht flüchtiges Medium, insbesondere Gas oder Luft, vorgesehen sein, welches sich gegenüber dem Erstmedium chemisch neutral verhält und insbesondere zu dessen Förderung dient. Jedes Medium kann aus einem Speicher vor einem Austragvorgang in einer dosierten Menge abgetrennt und dann ausgetragen werden. Hierbei sind wiederholte Austragvorgänge dadurch möglich, daß die Austragvorrichtung nach einem Austrag wieder in ihre Ausgangsstellung zurückgeführt wird oder die Austragvorrichtung kann so ausgebildet sein, daß der Speicher und die Dosierkammer einen einzigen Raum o. dgl. bilden, welcher ausschließlich zur Entleerung bestimmt ist, so daß die Austragvorrichtung nur für den einmaligen Austraggebrauch ausgebildet sein kann. Die jeweilige Medienkammer kann als Druckkammer volumenveränderbar sein, um das Medium aus ihr heraus zum Medienauslaß zu treiben. Die gespeicherte oder dosierte Medienmenge kann auch in einer in die Austragvorrichtung einzusetzenden Kapsel enthalten sein.

Der Erfindung liegt die Aufgabe zugrunde, eine Austragvorrichtung zu schaffen, bei welcher Nachteile bekannter Ausbildungen vermieden bzw. Vorteile der erläuterten Ausbildungen zu erzielen sind und die insbesondere bei einfachem Aufbau eine einfache Handhabung sowie ggf. eine genaue Dosierung zuläßt.

Erfindungsgemäß sind z.B. Mittel vorgesehen, um das Medium von mindestens einem Medienraum zu einem weiteren durch Gravitation, insbesondere teilweise oder vollständig durch seine eigene Schwerkraft, zu fördern. Das so vom einen in den anderen Raum fallende Medium kann dadurch über Gefällestrecken besonders schonend gefördert werden, was insbesondere bei Pulvern oder Medien mit ähnlichen Fließ- bzw. Rieseleigenschaften sehr zweckmäßig ist, weil es hierbei aufgelockert oder durchmischt wird. Vom Speicher bzw. von der Medienkammer bis zu dem innerhalb der Austragvorrichtung liegenden oder aus dieser heraus ins Freie führenden Medienauslaß sind aneinanderschließend solche Medienräume vorgesehen, nämlich Kammern, Öffnungen, Kanäle o. dgl., welche vor oder während des Austrages vom Medium durchströmt werden und weit genug sind um dem Medium die Sinkbewegung zu ermöglichen, ohne es durch Reibung bzw. Kapillarwirkung daran zu hindern.

Die Austragvorrichtung weist zweckmäßig eine Ruhe- bzw. Aufbewahrungsstellung, wie eine Standstellung, auf, welche in Bezug auf eine sie durchsetzende Vertikale von der zum Dosieren bzw. Austragen bestimmte Förder- oder Abgabestellung abweicht. Die erfindungsgemäße Ausbildung ermöglicht es jedoch, auch entgegen der Förderrichtung beim Austrag das Medium durch die Austragvorrichtung durch Gefälle zu fördern, nämlich von dem Medienauslaß zurück in die Medienkammer oder den Speicher, wenn die Vorrichtung gegenüber der vertikalen entsprechend ausgerichtet wird, beispielsweise in die Ruhestellung.

Die Kammer zur Festlegung der dosierten Medienmenge weist Begrenzungsflächen auf, die zweckmäßig größer sind als bei einer langgestreckten Kammer gleichen Volumens ohne Kern. Um trotzdem verhältnismäßig glatte bzw. im Axialschnitt geradlinige Begrenzungsflächen zu erzielen, kann die Kammer im Querschnitt ringförmig sein. Der die Dosiermenge bestimmende Kammerteil weist vorteilhaft einen Durchflußquerschnitt auf, welcher wesentlich kleiner als der unmittelbar an die Kammer anschließende Zuflußquerschnitt bzw. der gegenüber dem Zuflußquerschnitt kleinere Abflußquerschnitt ist. Der Zuflußquerschnitt kann mindestens 4- oder 6-fach größer als dieser Durchflußquerschnitt bzw. mindestens 1,5- oder 2-fach größer als der Abflußquerschnitt sein, welcher seinerseits mindestens 2- oder 3-fach größer als der Durchflußquerschnitt sein kann. Ein unmittelbar an den Abflußquerschnitt anschließender Auslaßkanal weist vorteilhaft gegenüber allen diesen Querschnitten einen nochmals wesentlich größeren Durchflußquerschnitt auf, der mindestens 1,5-fach größer als der Zuflußquerschnitt oder größer als die Summe aller drei o.g. Querschnitte sein kann, jedoch zweckmäßig wie der Zuflußquerschnitt während des Austrages stetig verengt wird, während hierbei der Abflußquerschnitt stetig erweitert wird. Die Verengung dient zweckmäßig zum Schließen des Zuflußquerschnittes bzw. die Erweiterung zum Öffnen des Abflußquerschnittes aus einem Schließzustand, während die Verengung des Durchflußquerschnittes des Auslaßkanales bzw. dessen stetige Verkürzung dazu dienen kann, durch Verkleinerung des zugehörigen Medienraumes, nämlich des Auslaßkanales, den Austrag zu beschleunigen und für eine vollständige Entleerung des Auslaßkanales zu sorgen.

Innerhalb der Medienkammer kann ein von der äußeren Kammerbegrenzung gesonderter Kernkörper vorgesehen sein, welcher gleichzeitig zum Öffnen und Schließen der beiden Kammeröffnungen vorgesehen und gegenüber dem Medienauslaß durch die Austragbetätigung bewegbar ist. Die Bewegung der einzelnen Bauteile bei der Austragbetätigung kann zwar eine Drehbewegung einschließen, ist jedoch zweckmäßig ausschließlich eine Axialbewegung. Vorteilhaft ist das Dosier- bzw. Aufnahmevolumen der Medienkammer so veränderbar, daß es bei der Befüllung der Medienkammer aus dem Medienspeicher unterschiedliche Werte annehmen kann. In der jeweiligen Volumeneinstellung, die stufenweise oder stufenlos vorgesehen sein kann, wird die Medienkammer durch Stellmittel gesichert, durch welche zweckmäßig der maximale Betätigungsweg der Austragbetätigung verändert wird. Die Stellmittel können manuell mit denselben Handhaben wie die Austragbetätigung betätigt werden, wobei die Betätigungsrichtung für die Stellmittel quer oder anders von der Betätigungsrichtung der Austragbetätigung abweicht.

Eine Speicher- bzw. Fördereinheit für das Zweitmedium ist vorteilhaft achsparallel bzw. achsgleich zur Medienkammer vorgesehen und kann diese am Außenumfang umgeben, so daß eine einzige Wandung beide Speicher- bzw. Medienkammern mit voneinander abgekehrten Flächen begrenzt.

Besonders zweckmäßig ist es, wenn Mittel vorgesehen sind, welche die Medienkammer mit Abstand zwischen dem Zulauf und dem Auslauf in zwei Kammerteile trennen, nämlich eine an die Zulauföffnung anschließende Vorkammer und eine stromabwärts daran anschließende Portionierkammer, deren Inhalt beim Austrag durch den Medienauslaß zu entleeren ist. Diese Trennmittel können durch eine Fluidströmung des Zweitmediums o. dgl. gebildet sein, welche bereits mit Beginn der Austragbetätigung und vor vollständigem Verschluß der Zulauföffnung einsetzt sowie bis zur vollständigen Entleerung der Portionierkammer aufrechterhalten bleibt. Dadurch wird auch am stromaufwärts liegenden Ende in die Portionierkammer eine Förderströmung eingeleitet, welche das Medium stromabwärts sowie bis zum Medienauslaß heraustreibt und dadurch alle von einem Eintritt für die Förderströmung bis zum Medienauslaß reichenden Medienräume vollständig von dem Erstmedium freispült.

Alle Vorrichtungsteile können zwischen einem Flansch für ihre tragende Verbindung mit dem Medienspeicher o. dgl. und einem von diesem entfernten, den Medienauslaß aufweisenden Ende vorgesehen sein, so daß sich eine sehr kompakte Ausbildung ergibt. Der Auslaßkanal kann auch als Zwischenspeicher ein oder mehrere Dosiervolumina des Mediums aus der Portionierkammer aufnehmen, wonach erst seine Entleerung durch den Medienauslaß erfolgt. Die Austragvorrichtung ist zweckmäßig so ausgebildet, daß sie

allein durch Überführung in die Überkopf- bzw. Abgabestellung ohne zusätzliche manueller Hub-Betätigung das Medium vom Speicher in die Medienkammer fördert bzw. in der demgegenüber verkehrten Normal- oder Standstellung das gesamte Dosiervolumen des Mediums von selbst aus der Medienkammer in den Speicher zurückgefördert wird. Durch gesonderte Aktivierung bzw. manuelle Betätigung einer Handhabe wird dann das Medium aus der Medienkammer in Richtung zum Medienauslaß freigegeben und ggf. auch erst dann das Zweitmedium in Austragströmung versetzt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen
- Fig. 1: eine erfindungsgemäße Austragvorrichtung in Seitenansicht und natürlicher Größe,
- Fig. 2: die Austragvorrichtung im vergrößerten Axialschnitt und geringfügig abgewandelter Ausführung,
- Fig. 3: eine weitere Ausführungsform in einer Darstellung entsprechend Fig. 2, jedoch rechts in Ausgangsstellung und links nach einem ersten Teilhub und
- Fig. 4: die Austragvorrichtung nach Fig. 3 in Ansicht.

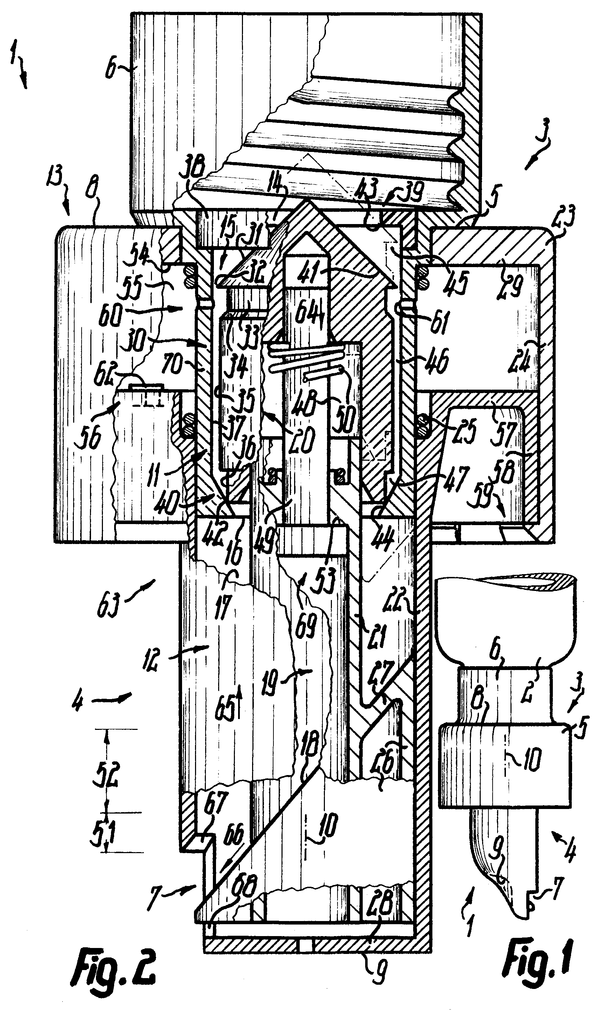

Die Vorrichtung 1 ist am verengten Hals eines flaschenförmigen, einteiligen Speichers 2 aus Glas, Kunststoff o. dgl. axial starr sowie gegen Verdrehen gesichert befestigt und durch zwei gegeneinander axial bewegbare sowie ungehindert drehbare Einheiten 3, 4 gebildet. Die Einheit 3 ist durch einen ein- oder mehrteiligen, hohlen Grundkörper 5 gebildet, welcher seinerseit drei axial aneinanderschließende bzw. ineinanderliegende Kappen bildet, von denen eine als Flansch 6 zur starren Befestigung am Speicherhals dient und für die Befestigung am Innenumfang ein Gewinde oder Schnappglieder bzw. am Außenumfang ein Befestigungsglied, wie einen Krimpring, aufweisen kann. An dem vom Flansch 6 entfernten Ende der Vorrichtung 1 weist die andere Einheit 4 am Außenumfang und/oder in der Endfläche als Medienauslaß 7 über einen Teilumfang von weniger als 180° oder 90° eine einzige, großflächige Durchbrechung auf, an welcher sich das Medium beim Austrag von der Vorrichtung 1 ablöst und die eine Durchlaßweite von mindestens 10, 20 oder 30 mm² aufweisen kann. Aus dem Auslaß 7 kann das Medium beim Austrag unmittelbar in ein Gefäß, wie ein Trinkglas, einen Löffel o. dgl. oder in den Mund eines Patienten abgegeben werden. In den Figuren 1 und 2 ist eine der Dosier- bzw. Abgabestellungen der Vorrichtung 1 dargestellt, die auch voneinander abweichen können und in welchen der Auslaß 7 unterhalb der Bauteile 2, 3, 5, 6 liegt. In der gegenüber dieser Überkopfstellung um 180° verdrehten Ruhestellung kann die Vorrichtung 1 mit dem Boden des Speichers 2 oder mit der dann unteren Seite der Körper 5, 6 auf einer Tischfläche standsicher mit vertikal ausgerichteter Achse 10 abgestellt werden, so daß dann der Auslaß 7 im oberen Bereich am oberen Ende der Vorrichtung 1 liegt.

Die Einheiten 3, 4 bilden durch voneinander wegweisende Querflächen jeweils eine Handhabe 8, 9, die mit den Fingern derselben Hand des Benutzers gleichzeitig gegriffen und einschließlich der Einheiten 3, 4 unter Verkürzung der Vorrichtung 1 durch Fingerdruck gegeneinander bzw. aufeinander zu bewegt werden können. Die weiter entfernt vom Auslaß 7 liegende Handhabe 8 kann im Abstand vom Speicher 2 beiderseits der Achse 10 am Außenumfang der Einheit 3 vorstehen und durch den Körper 5 oder den nicht näher dargestellten Bodenbereich des Speichers 2 gebildet sein, welcher auch gleichzeitig dessen Standfläche in der Ruhestellung bildet. Die weiter vorne, nämlich in der Arbeitsstellung gemäß Fig. 1 weiter unten und in den Ruhelage weiter oben liegende Handhabe 9 kann gemäß Fig. 1 axial und/oder radial hinter dem Auslaß 7 als Vertiefung oder gemäß Fig. 2 am vordersten Ende der Einheit 4 liegen, derart daß an der Handhabe 8 zwei Finger und an der Handhabe 9 ein Finger der Hand abgestützt werden können. Beim Arbeitshub wird die Einheit 4 in der Einheit 3 versenkt, jedoch nur soweit, daß der Auslaß 7 und die Handhabe 9 stets außerhalb der Einheit 3 verbleiben. Im wesentlichen alle Bauteile der Vorrichtung 1 sind symmetrisch oder rotationssymmetrisch zu deren Mittelachse 10 ausgebildet, wovon nur der Auslaßbereich und im Falle der Ausbildung nach Fig. 1 die Handhabe 9 oder ein Einlaßbereich abweichen.

Zwischen ihren Enden bzw. axial hinter dem Auslaß 7 umfaßt die Vorrichtung 1 drei Fördereinheiten 11, 12, 13, von denen zwei Einheiten 11, 12 axial aneinander anschließen, während eine weitere Einheit 13 radial an die hintere dieser Einheiten 11, 12 anschließt. Die Vorrichtung 1 und die Einheiten 11 bis 13 bilden Medienräume bzw. Förderwege oder Fallkanäle, nämlich eine Durchgangsöffnung 14 für den unmittelbaren Zulauf des Mediums aus dem Speicher 2, eine unmittelbar an den Zulauf 14 angrenzende Kammer 15 für die Mediendosierung, eine unmittelbar an die Kammer 15 angrenzende Durchgangsöffnung 16 für den Auslauf des Mediums aus der Kammer 15 und einen unmittelbar an die Kammer 15 und den Auslauf 16 angrenzenden Medienraum 17, der als Auslaß- bzw. Fallkanal und Zwischenspeicher ausgebildet ist sowie mit seinem vorderen Ende unmittelbar an die Öffnung 7 über eine geneigte Lauf- bzw. Fließbahn für das Medium anschließt. Die Medienräume 14 bis 16 gehören zur Einheit 11, während der Medienraum 17 eine mit der Austragbetätigung volumenveränderbare Förder- bzw. Ausstoßkammer für das Medium bildet, die nach Art einer Druckkammer der Fördereinheit 12 wirkt, jedoch bei der Volumenverkleinerung nicht tatsächlich unter Druck gesetzt wird, weil die Öffnung 7 hierzu zu groß und ohne Querschnittsveränderung stets wie der Kanal 17 ventilfrei offen ist.

Alle Räume 14 bis 17 liegen stets achsgleich zueinander bzw. in der Achse 10, von welcher jeder Raum 14 bis 17 dadurch Radialabstand hat, daß er um die Achse 10 ringförmig angeordnet ist. Aneinanderschließende und daher als Förderwege ineinander übergehende Räume 14 bis 17 weisen unterschiedliche Durchflußquerschnitte sowie unterschiedliche größte und/oder kleinste Radialabstände von der Achse 10 auf. Die größten wie die kleinsten Radialabstände jedes Raumes sind durch kontinuierliche äußere Begrenzungs- bzw. Ringflächen gebildet, welche jeweils über den Umfang konstante Radialabstände von der Achse 10 haben. Die gleich großen, größten Radialabstände der Durchgangsöffnungen 14, 16 sind kleiner als die größten Radialabstände der Räume 15, 17, von denen der größte Radialabstand des Raumes 17 größer als der des Raumes 15 ist. Der kleinste Radialabstand des Raumes 14 ist kleiner als der aller übrigen Räume 15 bis 17 und der kleinste Radialabstand des Raumes 15 ist größer als derjenige des Raumes 17. Zwischen dem größten und dem kleinsten Radialabstand ist der jeweilige Raum 14 bis 17 über seinen Umfang durchgehend für den Durchfluß des Mediums frei.

Vollständig innerhalb einer Einheit 4 ist als Arbeitsglied ein Betätigungsschaft 19 bzw. Stößel in der Achse 10 vorgesehen, welcher einteilig stets wenigstens bis zur schrägen Fläche 18 sowie in die Räume 16, 15 reicht und axial sowie gegen Verdrehen gesichert an der Einheit 4 befestigt ist. Stets innerhalb der Räume 14, 15 und des Flansches 6 sowie außerhalb des Raumes 17 liegt als Kern ein Körper 20, welcher zur Steuerung des Medienflusses durch die Förderwege in entgegengesetzten Richtungen dient, wie der Schaft 19 unmittelbar an diese Förderwege angrenzt, gegenüber den Anordnungen 2 bis 19 axial hin- und hergehend verschiebbar sowie drehbar und als Kernkörper ausgebildet ist, der auch vollständig innerhalb den Einheiten 2, 3 liegt, ohne axial über die jeweilige Einheit 3 bzw. 4 vorzustehen.

Der Schaft 19 ist über den größten Teil seiner Länge durch einen rohrförmigen Mantel 21 gebildet, welcher einteilig mit der Fläche 18 ausgebildet ist, die den dem Auslaß 16 gegenüber liegenden Boden der Kammer 17 bildet. Der Stößel 19, 21 bzw. sein Mantel ist am Außenumfang mit Radialabstand von einem Mantel 22 der Einheit 4 umgeben, welcher an einem begrenzten Umfangsbereich vom Auslaß 7 durchsetzt ist. Wenigstens über die gesamte Länge des Raumes 17 weisen die Wandungen 21, 22 stets konstante Innen- bzw. Außenquerschnitte auf. Der Außenumfang der Wandung 21 bildet die radial innere und der Innenumfang des Mantels 22 die radial äußere Begrenzung des Raumes 17 und an beide Begrenzungen schließt die Fläche 18 unmittelbar abgedichtet an, so daß in ihrem Bereich der Durchgangsquerschnitt des Kanals 17 bis zum Auslaß 7 abnimmt. Das hintere Ende des Mantels 22 ragt stets in eine Ringnut der Einheit 3, 5, welche am Außenumfang und am Boden von einer Kappe 23 dieser Einheit begrenzt ist. Der Mantel 22 und die Kappe 23 bilden wie der Flansch 6 die über den Umfang freiliegenden äußersten Außenflächen der Vorrichtung 1, die radial gegeneinander abgesetzt in Axialrichtung unmittelbar aneinander anschließen.

Die zweite Kappe 23, die hier durch einen vom Flansch 6 gesonderten Bauteil gebildet ist, aber gemäß Fig. 1 auch einteilig mit dem Flansch 6 ausgebildet sein kann, weist einen nach vorne frei vorstehenden Mantel 24 auf, der die Räume 15, 16 sowie nur das hintere Ende des Raumes 17 umgibt und über dessen vorderes freies Ende die Einheit 4 mit dem Mantel 22 vorsteht. Innerhalb der Wandung 24 des Körpers 23 und des hinteren Endes des Mantels 22 liegt eine um die Achse 10 ringförmige Feder 25, nämlich eine Schrauben-Druckfeder, welche die Einheiten 3, 4 nach manueller Freigabe der Handhaben 8, 9 aus der strichpunktiert angedeuteten Arbeits-Endstellung oder jeder Zwischenstellung wieder in die Ausgangsstellung gemäß den Figuren 1 und 2 zurückführt und hierbei auch den Körper 20 mitnimmt. Die Feder 25 liegt stets zwischen den Enden der Körper 5, 20 bzw. der Kammer 15, welche wie die Öffnung 16 stets in das hintere Ende des Mantels 22 hineinragt bzw. das hintere Ende des Mantels 21 mit Radialabstand umgibt.

Die Fläche 18 und der Stößel 19 sind hier durch einen von der übrigen, einteiligen Einheit 4, 22 gesonderten Körper gebildet, welcher vollständig innerhalb des Austragstutzens bzw. Mantels 22 liegt, jedoch mit diesem auch einteilig ausgebildet sein kann. Dieser Körper weist einen festsitzend sowie dicht an den Innenumfang des Mantels 22 anschließenden Mantel 26 und an dessen hinteren Ende eine schräg zur Achse 10 geneigte Stirnwand 27 auf, die einteilig an die Mäntel 21, 26 anschließt, mit ihrer Außenseite die Fläche 18 bildet und über deren Innenseite der Mantel 21 mit Radialabstand innerhalb des Mantels 26 wie dieser bis zu einer End- bzw. Stirnwand des Austragstutzens fortgesetzt sein kann. Die Außenseite dieser, einteilig mit dem Mantel 22 ausgebildeten, Stirnwand 28 bildet die Handhabe 9, wobei hier von ihrer Innenseite die Mäntel 21, 26 einen geringen Spaltabstand haben, so daß das Innere des Mantels 21 bis zur Öffnung 7 einen Förderweg bildet.

Die unmittelbar an den ringförmigen Kappenboden des Flansches 6 anschließende und über den Außenumfang des Flansches 6 radial vorstehende Stirnwand 29 der Kappe 23 bildet die Handhabe 8 und von ihrer radial äußersten Zone steht der Mantel 24 nur nach vorne vor, während der Flanschmantel 6 nur nach hinten über die Außenseite der Stirnwand 29 vorsteht. Nur über die Innenseite der Wand 29 und mit Radialabstand innerhalb der Wand 24 steht ein Mantel 70 der dritten Kappe weniger weit als der Mantel 24 vor. Die Wandung 70 ist hier einteilig mit dem Flansch 6 sowie als von der Kappe 23 gesonderter Bauteil ausgebildet, der mit seinem hinteren Ende unmittelbar an den Flanschboden bzw. mit seinem Außenumfang unmittelbar an die Wand 29 anschließt, mit dieser und der Wandung 24 aber auch einteilig ausgebildet sein kann. Zwischen dem Innenumfang der Wandung 24 und dem Außenumfang der Wandung 70 liegt das hintere Ende des Mantels 22, der an beiden Umfängen dicht gleiten kann. Von der Stirnwand 29 bis zu seinem äußeren Ende weist der Mantel 70 konstante Außenquerschnitte sowie über den größten Teil dieser Länge auch konstante Innenquerschnitte auf. Der Innenumfang des Mantels 70 bildet die radial äußere Begrenzung der Räume 15, 16, während der Außenumfang des Körpers 20 die radial inneren Begrenzungen der Räume 14, 15 und der Mantel 21 die radial innere Begrenzung der Räume 16, 17 bildet.

Im Bereich der Räume 14 bis 17, 7 sind Steuermittel 30 wirksam, mit welchen die Füllng und Entleerung dieser Räume sowie des Medienraumes des Speichers 2 in entgegengesetzten Strömungsrichtungen gesteuert werden kann. Das hintere Ende des Körpers 20 bildet eine spitzkegelige, von der Achse 10 durchgehend konstant unter 45° geneigte Leitfläche 31, deren gegenüber der Spitze nach vorne versetztes und von der Achse 10 am weitesten entferntes Ende einen Vorsprung mit einer Kante 32 bildet, von welcher das Medium bei seiner Strömung in Richtung zur Öffnung 16 abreißen und dann frei fallen kann. An die Abreißkante 32 schließt nach vorne eine ringnutförmige Vertiefung 33 an, deren hintere Flanke rechtwinklig zur Achse 10 liegt sowie die zugehörige Flanke der Kante 32 bildet, während die vordere Flanke 34 als stumpfkegelförmig schräge Leitfläche 34 unter 45° geneigt ist und unmittelbar an eine zur Achse 10 parallele Außen- oder Mantelfläche 35 anschließt. Deren vorderes Ende schließt stufenförmig zurückversetzt an die Bodenfläche einer Vertiefung 36 an, deren hintere, an die Fläche 35 anschließende Flanke rechtwinklig zur Achse 10 liegt und die nach vorne von keiner vorstehenden Flanke begrenzt ist.

Von den Flächen 31 bis 36 hat die zylindrische Fläche 35 in Richtung der Achse 10 die größte Länge, gegenüber welcher die Länge der Fläche 31 um etwa ein Drittel kürzer ist. Gegenüber den Flächen 31, 35 sind die zylindrischen Flächen 33, 35 und die Kegelfläche 34 wesentlich kürzer, da die Länge der Fläche 33, 36 höchstens ein Viertel oder ein Fünftel der Länge der Fläche 35 und höchstens die Hälfte oder ein Drittel der Länge der Fläche 31 beträgt. Die Fläche 34 ist wesentlich kürzer und die Fläche 36 geringfügig länger als die Fläche 33. Die Länge jeder dieser Flächen 31 bis 36 ist kleiner als ihr doppelter mittlerer Abstand von der Achse 10, so daß der Körper 20, der alle Flächen 31 bis 36 einteilig miteinander bildet, sehr kurz ausgebildet werden kann. Der Abstand der Fläche 35 von der Achse 10 ist geringfügig kleiner als derjenige der Kante 32 und geringfügig größer als derjenige der Flächen 33, 36, von welchen die Fläche 36 bis zum vorderen Ende des Körpers 20 reicht.

Die Außenumfangs-Flächen 31 bis 36 bilden die näher bei der Achse 10 liegende innere Begrenzung der Kammer 15 über deren gesamte Länge. Die dieser Begrenzung gegenüberliegende, von der Achse 10 weiter entfernte äußere Begrenzung 37 ist über den größten Teil ihrer Länge durch den Innenumfang der Wandung 70 und auf einem kleinen, hinteren Längs- bzw. Endabschnitt durch eine druckelastisch nachgiebige, gesonderte Dichtung 38 gebildet, welche am hinteren Ende des Mantels 17 innerhalb der Stirnwand 29 sowie des Bodens des Flansches 6 liegt und mit ihrem Innenumfang eine kontinuierliche Fortsetzung der zylindrischen Kammerfläche 37 bildet.

Zur wechselweisen Öffnung und Schließung der Öffnungen 14, 16 bzw. der durch diese gebildeten Enden der Kammer 15 weisen die Steuermittel 30 zwei Ventile 39, 40 auf, für die der Körper 20 jeweils einen der Ventilkörper und der Körper 5 jeweils den anderen Ventilkörper bildet. Die bewegbaren Ventilkörper liegen an den Enden des Körpers 20 und sind einschließlich der zugehörigen Schließflächen 41, 42 einteilig mit dem Körper 20 ausgebildet. Die anderen Ventilkörper liegen an den Enden des Mantels 70 und sind einschließlich der zugehörigen Schließflächen 43, 44 einteilig mit der Dichtung 38 bzw. dem Mantel 70 ausgebildet. Die ringförmige Dichtung 38 ist im Querschnitt winkelförmig, wobei ein ringscheibenförmiger Stirnwandschenkel gegen die Achse 10 nur über den Innenumfang bzw. die Fläche 37 des zylindrischen Dichtungsschenkels vorsteht und mit seinem Innenumfang die konstant weite, äußere Begrenzung der Öffnung 14 sowie von dieser flankiert die scharfkantige Gegenfläche 43 des Ventiles 39 bildet, das mit einem einzigen Schließsitz sowohl das Auslaßventil für den Speicher 2 als auch das Einlaßventil für die Kammer 15 bildet. Die hintere Stirnfläche der Dichtung 38 bzw. die äußere Stirnfläche des radialen Dichtungsschenkels bildet gleichzeitig die Dichtfläche zur axial vorgespannten Anlage an der ringförmigen Stirnfläche des Speicherhalses, durch den die Schließkante 43 geringfügig axial nach vorne gedrückt sowie die Dichtung 38 in ihrer Anlage am Körper 5 radial verspannt sowie lagegesichert sein kann. Die Schließfläche 41 ist unmittelbar durch die Schrägfläche 31 gebildet, nämlich durch eine Ringzone, an welcher die Schließfläche 43 nur linienförmig anliegt und die naher bei der Kante 32 als beim hinteren Ende der Fläche 31 liegt.

Die scharfkantige Schließfläche 42 ist durch das vordere Ende des Körpers 20 gebildet und von dessen vorderer Endfläche sowie von der Fläche 36 wie die Kante 43 rechtwinklig flankiert. Die Gegenfläche 44 ist durch eine zur Achse 10 geneigte und sich dieser nach vorne spitzwinklig annähernde, spitz kegelstumpfförmige Fläche 44 gebildet, welche mit ihrem erweiterten Ende unmittelbar an die Fläche 37 einteilig anschließt, bis zum vorderen Ende des Mantels 70 reicht und die radial äußere Begrenzung der Öffnung 16 bildet, so daß diese in Strömungsrichtung abnehmende Durchflußquerschnitte aufweist. An ihr sowie mit Abstand zwischen ihren Enden liegt die Fläche 42 über den Umfang durchgehend nur linienförmig an. Die Schließflächen 41, 42, 44 sind unter den auftretenden Belastungen formsteif, während die Schließfläche 43 rückfedernd elastisch nachgiebig ist. Die radial äußere Begrenzung des Raumes 17 liegt von der Achse 10 weiter entfernt als die radial äußere Begrenzung der Öffnung 16, wobei letztere Begrenzung dadurch, daß sie in der zur Achse 10 rechtwinkligen Endfläche des Mantels 70 liegt, als Abreißkante für das Medium spitzwinklig flankiert ist. Das Ventil 40 bildet ein Auslaßventil für die Kammer 15 und ein Einlaßventil für die Kammer 17. Beide Ventile 39, 40 können in entgegengesetzten Richtungen durchströmt werden.

Die Kammer 15 erstreckt sich von der Schließfläche 43 bis zur Schließfläche 44, an welcher sie endet. Die Kammer 15 ist ihrerseits in Längs- bzw. Kammerabschnitte 45 bis 47 unterteilt, von denen aneinanderschließende Abschnitte unterschiedliche innere bzw. äußere Radialabstände von der Achse 10 und dadurch auch unterschiedliche Durchflußquerschnitte haben. An das Kammerende 43 schließt eine in Strömungsrichtung im Querschnitt linear abnehmende Vorkammer 45 an, die anschließend an die Öffnung 14, 43 einen abrupt erweiterten Durchflußquerschnitt aufweist, welcher bis zur Kante 32 abnimmt und im mittleren Bereich gegenüber allen übrigen Kammerabschnitten am größten sowie im Ringspalt oder der Öffnung zwischen der Kante 32 und der Fläche 37 am kleinsten ist. Gegenüber diesem Drossel- und Spaltquerschnitt ist der unmittelbar anschließende Durchflußquerschnitt zwischen den Flächen 33, 37 größer sowie gegenüber dem mittleren Querschnitt der Vorkammer 45 kleiner, solange deren Begrenzungsfläche 31 in der Ausgangsstellung gemäß Fig. 2 steht. In Strömungsrichtung schließt über die Fläche 34 an die Lockerungskammer der Fläche 33 unmittelbar eine Portionierkammer 46 an, welche von den Flächen 35, 37 begrenzt ist und deren durchgehend konstanter Durchflußquerschnitt kleiner als der im Bereich der Fläche 33 bzw. der mittlere Durchflußquerschnitt der Vorkammer 45 ist. An diese Kammer 46 schließt unmittelbar nochmals eine von den Flächen 36, 44 begrenzte Lockerungskammer mit einem Durchflußquerschnitt an, der größer als derjenige der Kammer 46 bzw. gleich groß wie derjenige im Bereich der Fläche 33 ist und in Strömungsrichtung bis zum Ventilsitz 42, 44 spitzwinklig mit gleicher Steigung wie der unmittelbar nachfolgende Bereich der Öffnung 16 abnimmt. Die Flächen 33, 36 können gleiche Abstände von der Achse 10 haben. In der strichpunktiert angedeuteten Endstellung des Arbeitshubes der Flächen des Körpers 20 liegen die Kante 32 und der anschließende Endabschnitt der Fläche 33 dem elastisch nachgiebigen Innenumfang der Dichtung 38 gegenüber, wobei die Vorkammer 45 am kleinsten ist.

Der Körper 20, der auch aus mehreren Einzelkörpern zusammengesetzt sein kann, ist kappenförmig ausgebildet und seine nach vorne offene Kappenöffnung bildet eine Teleskopführung 48, in welche der Schaft 19 mit dem Außenumfang des Mantels 21 dicht gleitend eingreift, ohne daß Medium in den Körper 20 bzw. die Öffnung 48 eintreten kann. Der Körper 20 ist nach hinten gegenüber der Einheit 4 mit einer Feder 50 belastet, welche am Boden der Teleskopöffnung 48 und am hinteren Ende des Mantels 21 versenkt sowie wie die sie umgebende Feder 25 stets vorgespannt abgestützt ist. Zur Sicherung der Einheit 4 gegen Abziehen von der Einheit 3 nach vorne ist ein bolzenförmiges Zwischenglied 49 vorgesehen, welches die Schrauben- bzw. Druckfeder 50 zentrierend durchsetzt, mit seinem hinteren Ende festsitzend in einer reduzierten Anschlußbohrung der Öffnung 48 angeordnet sowie innerhalb des Mantels 21 dreh- sowie längsverschiebbar geführt ist. Die Anschlußbohrung durchsetzt als Sacklochbohrung den Boden der Öffnung 48, reicht bis in den Kegel 31 und nimmt mit Preßsitz das Ende des Schaftes des Stößelgliedes 49 auf, welcher über seine Länge durchgehend konstante Querschnitte aufweist, nämlich zylindrisch ist.

In der Ruhestellung ist das Ventil 39 weitestgehend geöffnet und das Ventil 40 dicht geschlossen. Bei der nach hinten gerichteten Hubbewegung der Einheit 4 führt ein erster Teilhub 51 unter stetiger Verengung des Durchflußquerschnittes des Ventiles 39 zu dessen Schließen sowie unter stetiger Erweiterung des Durchflußquerschnittes des Ventiles 40 zu dessen vollständigem Öffnen, wobei das Ende dieses Teilhubes 51 durch gegenseitigen Anschlag der Flächen 41, 43 bestimmt ist. Bei dem in gleicher Richtung weiterführenden sowie unmittelbar anschließenden, mindestens 1,5- bis 2-fach längeren Teilhub 52 bleibt der Körper 20 nunmehr gegenüber der Einheit 3 wegen des Anschlages stehen, während die Einheit 4 entgegen der Kraft der Federn 25, 50 gegenüber den Körpern 5, 20 weiter nach hinten bewegt wird. Beim Teilhub 51 werden die Einheiten 4, 20 gleichlaufend bewegt, und mit Beginn des Teilhubes 52 hebt die Einheit 4 von einem Anschlag 53 des Körpers 20 ab. Der Anschlag 53 ist durch eine ringförmige Bodenfläche im Mantel 21 gebildet, an welcher ein erweiterter Bund am vorderen Ende des Gliedes 49 in der Ruhelage anliegt und welcher die Einheiten 3, 4 dadurch gegen Außeinanderziehen sichert, daß einerseits der Anschlag 53 die Einheit 4 gegenüber dem Körper 20 und andererseits die Anschlagflächen 42, 44 den Körper 20 gegenüber der Einheit 3 lagesichern. Am Ende des Teilhubes 52 schlägt die Einheit 4 mit dem hinteren Ende des Mantels 22 an einem Anschlag 54 an, welcher durch die Boden- bzw. Innenfläche der Kappe 23 bzw. der Stirnwand 29 gebildet ist. Wird versucht, die Einheiten 3, 4 in der Ruhelage außeinander zu ziehen, so spreizt die Fläche 42 den vorderen Endbereich des Mantels 70, wodurch dieser den dicht an ihm gleitenden Mantel 22, 58 radial bzw. gegen die Innenseite des Mantels 24 verspannt.

Die Fördereinheit 13 für das Zweitmedium ist als selbstansaugende Schubkolben- bzw. Luftpumpe ausgebildet, deren Druck- oder Pumpenkammer 55 in der Kappe 23 liegt und vom Innenumfang des Mantels 24, vom Außenumfang des Mantels 70, vom hinteren Ende des Mantels 22 sowie von der Innenseite der Stirnwand 29 begrenzt ist. Am vorderen Ende ist die ringförmige Kammer 55 von einem fest bzw. einteilig mit dem Mantel 22 verbundenen Kolben 56 bzw. von dessen ringscheibenförmiger Stirnwand 57 begrenzt, die vom hinteren Ende des Mantels 22 radial nach außen absteht und an ihrem äußersten Umfang in einen nach vorne gerichteten Mantel 58 übergeht. Der dicht an den genannten Flächen der Wandungen 24, 70 gleitende Kolben 56 kann auch durch einen vom Körper 4, 22 gesonderten und gegenüber diesem elastischeren Bauteil gebildet sein. Eine Sicherung 59 der Einheiten 3, 4 gegen gegenseitiges Abziehen kann auch unmittelbar zwischen den Kappen 24, 56 wirksam sein, beispielsweise als Schnappsicherung, die an den vorderen Enden der Mäntel 24, 58 angreift.

Der Kolben 56 wird über den Gesamthub 51, 52 mit der Einheit 4 gleichlaufend und ununterbrochen durchgehend bewegt und schlägt mit seiner Stirnfläche am Ende des Teilhubes 52 ganzflächig an der Stirnfläche 54 an, so daß dann die Kammer 55 vollständig entleert ist. Bei dem durch die Feder 25 angetriebenen Rückhub wird Luft von außen in die sich vergrößernde Kammer 55 durch ein druckabhängig arbeitendes Ventil 62 angesaugt, welches eine Einlaßöffnung im Kolbenboden 57 öffnen und schließen kann. Über den gesamten Arbeitshub 51, 52 wird aus der Kammer 55 Luft in die Räume 15 bis 17 sowie nur beim Teilhub 51 auch in den Raum 14 und in den Speicher 2 durch Mündungen 61 gedrückt, welche ausschließlich in der Kammer 15 stets stromabwärts von der Vorkammer 45 und der Kante 32 liegen und in Umfangsrichtung schlitzförmig ausgebildet sein können. Die radial gegen die Achse 10 gerichteten Mündungen 61 sind durch die inneren, in der Fläche 37 liegenden Enden von sehr engen Düsenkanälen gebildet, welche die Wandung 70 rechtwinklig quer durchsetzen und in Ruhelage gegen die Fläche 33 gerichtet sind. Die Axialausdehnung der Mündungen 61 ist kleiner als die der Fläche 33 und die teilsektorförmigen Mündungen 61 können den größten Bereich der zugehörigen Umfangserstreckung einnehmen, so daß sie ähnlich einer durchgehenden Ringdüse über den gesamten Umfang des Körpers 20 gleiche Strömungswirkung haben.

Dadurch sind Mittel 60 gebildet, welche den Medieninhalt innerhalb der Kammer 15 durch einen ringscheibenförmigen Strömungsteppich in zwei Längsabschnitte teilen, nämlich in einen Medienabschnitt vor den Mündungen 61 und einen Medienabschnitt hinter diesen Mündungen 61, der innerhalb der Vorkammer 45 liegt. Die durch die Mündungen 61 einströmende Luft fördert vor dem Schließen des Ventiles 39 das Medium aus der Kammer 45 durch die Öffnung 14 auch zurück in den Speicher 2 sowie mit dem Öffnen des Ventiles 40 das in den Kammerabschnitten 46, 47 befindliche Medium durch die Öffnung 16 in die Kammer 17.

Die Vorrichtung 1 ist zur Durchführung folgender Verfahren geeignet. Aus der aufrecht stehenden oder liegenden Lage wird die Vorrichtung mit einer Hand aufgenommen und so gedreht, daß das vordere Ende mit dem Auslaß 7 unten liegt. Das Medium, insbesondere Pulver, sinkt unter seiner Schwerkraft durch die Öffnung 14 auf die Fläche 31, so daß sein unterer Bereich mit einer dem Kegel 31 entsprechenden Höhlung versehen wird und es die Vorkammer 45 mehr oder weniger vollständig ausfüllt. Vom Rand der Höhlung fließt das Medium unter Gewichtskraft weiter über die Kante 32 als feiner Mantelstrom durch den zugehörigen Spalt und an den Flächen 33, 34 vorbei entlang der Fläche 37 in die Portionierkammer sowie entlang der Flächen 36, 44 bis zum Verschluß 42, von welchem es dann unter Füllung dieser Kammern nach oben bis zur Kante 32 und ggf. bis zur vollständigen Füllung der Vorkammer 45 ansteigt, so daß die Kammer 15 mit leicht verdichtetem bzw. unter seinem Gewichtsdruck stehenden Medium vollständig gefüllt sein kann. Bei schwerer fließenden bzw. rieselnden Medien kann dieser Vorgang durch manuelles Schütteln oder mit Mitteln unterstützt werden, welche auf die Einheiten 2 bis 4 bei der Betätigung eine Vibration ausüben.

Entlang der Fläche 31 gleitet das Medium schräg gegen und an die Fläche 37, wonach es hauptsächlich parallel zur Achse 10 nach vorne in Richtung 64 fließt, bis es in der Teilkammer 47 entlang der Fläche 44 wieder schräg gegen die Achse 10 fließt und durch Füllung dieser Kammer 47 in dem durch die Flächen 36, 44 gebildeten, ringförmigen Keilspalt verdichtet wird. Nach dieser Füllung der Kammer 15 wird mit der Austragbetätigung 63, welche durch die Einheiten 3, 4 bzw. die Handhaben 8, 9 gebildet ist, die Vorrichtung 1 verkürzt, wobei die Einheit 4 gegenüber der Einheit 3 nach hinten in Richtung 65 und die Einheit 3 gegenüber der Einheit 4 nach vorne in Strömungsrichtung 64 bewegt wird. Mit dem dadurch eingeleiteten Beginn des Teilhubes 51 hebt die Fläche 42 von der Fläche 44 ab, so daß die Kammern 45 bis 47 je Hubeinheit zunächst stetig und dann stärker geöffnet werden, nämlich wenn die Fläche 42 am hinteren Ende der Fläche 44 vorbei in den Bereich der Fläche 37 läuft. Die Länge der Fläche 36 ist kürzer als der Teilhub 51.

Mit dem Teilhub 51 beginnt auch Luft aus der Kammer 55 durch die Mündungen 61 zunächst gegen die Fläche 33, dann gegen die Fläche 34 und schließlich gegen die Fläche 35 des an ihnen vorbeilaufenden Körpers 20 zu strömen, wodurch das Medium gegen diese Flächen gedrückt, aufgelockert und seine Fließfähigkeit verbessert wird. Während des gesamten Teilhubes 51 drückt der Kegel 31 als Kolben das in der sich dabei verengenden Teilkammer 45 befindliche Medium zurück durch die Öffnung 14 in den Speicher 2, wobei die Kante 32 ähnlich einer Schabkante entlang der Fläche 37 bewegt wird. Auch ein Teil der einströmenden Luft wird, insbesondere an der Fläche 34, nach hinten in den Spalt der Kante 32 sowie in die Kammer 45 und die Öffnung 14 umgelenkt, wodurch das Zurücktreiben des Mediums und die Reinigung der Flächen 41, 43 unterstützt wird. Während des gesamten Teilhubes 51 wird der Durchlaßquerschnitt des Ventiles 39 stetig verengt, bis er durch gegenseitige Anlage der Flächen 31, 43 geschlossen ist. Die Fläche 43 schert dabei das Medium ringförmig ab, so daß es in einen zum Speicher 2 gehörenden und einen zur Kammer 15 gehörenden Volumenanteil unterteilt ist und die Teilkammer 45 ein Restvolumen hat, das kleiner als das Volumen jeder der übrigen Teilkammern 15, 46, 47 ist.

Mit dem Beginn des Teilhubes 51 beginnt das Medium aus den Teilkammern 45 bis 47 entlang der sich in Richtung 64 verengenden Trichterfläche 44 schräg zur Achse 10 aus der Ringöffnung 16 gegen den Außenumfang des Schaftes 19, 21 über den Umfang gleichmäßig in die Ringkammer 17 zu strömen, die einen wesentlich größeren Durchflußquerschnitt als jede der Teilkammern 45 bis 47 oder die Öffnungen 14, 16 hat. Der Durchflußquerschnitt der Kammer 17 ist sogar größer als die Summe der Querschnitte der Räume 14, 16, 46, nämlich höchsten 3- oder 2-fach größer als der Durchflußquerschnitt der Öffnung 14 im ganz geöffneten Zustand, der seinerseits mindestens 2- oder 3-fach größer als der Durchflußquerschnitt der Öffnung 16 sein kann. Der Querschnitt der Kammer 17 kann somit mindestens 3- oder 4-fach größer als derjenige der Öffnung 16 sein, wobei die innere Ringbegrenzung der Räume 16, 17 kontinuierlich durchgeht, während die äußere Ringbegrenzung der Öffnung 16 abgestuft in diejenige der Kammer 17 übergeht. Dadurch wird das Medium beim Verlassen der Kante 42 in einer ersten Stufe und beim Verlassen der Öffnung 16 in einer zweiten Stufe aufgelockert. Aus der Öffnung 16 und durch die Kammer 17 fällt das Medium auf die Ringfläche 18, welche in Ansicht rechtwinklig zur Achse 10 parallel zu dieser langgestreckt bzw. elliptisch ist und mit ihrem vorderen Ende bis in die Öffnung 7 hineinreicht bzw. diese gemäß Fig. 2 durchsetzt. Mit dem Teilhub 51 beginnt auch die Fläche 18 bzw. der Körper 26, 27 als Kolben nach hinten zu wandern, wodurch er sich den Räumen 2, 14, 45, 46, 47, 16 annähert und die Kammer 17 durch Verkürzung im Volumen stetig verkleinert wird. Auch das vordere Ende des Mantels 70 wirkt dabei als Kolben bis zu dem das hintere Ende der Fläche 18 annähernd bewegt wird. Das Volumen der Kammer 17 ist dann noch mehrfach größer als das der Kammer 15, 45, 46, 47.

Vom Beginn bis zum Ende des Teilhubes 51 strömt der nicht nach hinten fließende zweite Teil der durch die Mündungen 61 einströmenden Luft nach vorne und drückt das Medium unter Auflockerung bzw. Zerstäubung aus den Teilkammern 46, 47 durch die Öffnung 16 in die Kammer 17, wobei die Öffnung 16 wie eine Zerstäuberdüse wirkt, aus welcher der Luft- bzw. Förderstrom durchmischt mit dem Medium austritt. Entsprechende Zerstäuberdüsen bilden auch die ringförmigen Spalte an der Kante 32, an den vorderen Kanten der Flächen 35, 36 sowie mit zunehmender Verengung die Öffnung 14. Ab der Öffnung 16 sind nur noch die demgegenüber wesentlich erweiterten sowie ventilfreien Durchflußquerschnitte bis zur Öffnung 7 vorgesehen, so daß der gemischte Förderstrom nicht mehr verdichtet wird. Von der gesamten Ringfläche 18 fließt das Medium um den Schaft 19, 21 und entlang der Innenfläche des Mantels 22 unter Gewichtskraft in Richtung 66 schräg nach unten in die Öffnung 7 und aus dieser heraus aus der Vorrichtung 1.

Die Öffnung 7 kann rechtwinklig quer zur Achse 10 bzw. in Umfangsrichtung langgestreckt sowie rechteckig sein und ihre hintere Begrenzung 67 bzw. Kantenfläche ist vorteilhaft parallel zur Fläche 18 geneigt, welche die gegenüberliegende vordere Begrenzung der Öffnung 7 bildet. Ihr Durchflußquerschnitt ist kleiner als der der Räume 14, 17 und größer alas der der Räume 16, 45, 46, 47, wobei der Durchflußquerschnitt des Auslaßkanales 17 mindestens zwei- oder dreifach größer als der der Öffnung 7 sein kann. Das Volumen der Kammer 17 ist stets größer als das der Kammer 15, so daß das Medium nach Verlassen der Kammer 15 bei entsprechender Ausrichtung der Vorrichtung 1 zunächst auch vollständig in der Kammer 17 verbleibt und danach durch Lageänderung der Vorrichtung 1 erst aus der Öffnung 7 ausgetragen werden kann.

Während des gesamten Teilhubes 52 strömt alle Luft aus den Öffnungen 61 nur noch gegen die Fläche 35 sowie nach vorne in Richtung 64, so daß vor Schließen des Ventiles 39 auf das portionierte Medium ein schwächerer Luftstrom wirkt, der jedoch mit der Schließbewegung des Ventiles 39 stetig zunimmt, bis er während des gesamten Teilhubes 52 konstant bleibt und die Fläche 18 anströmt. Mit Beginn des Teilhubes 52 hebt der Anschlag 53 ab bzw. beginnt der Schaft 19 sich gegenüber dem Körper 20 nach hinten zu bewegen und die Feder 50 wird weiter vorgespannt. Der im Mantel 21 verschiebbare Bund des Gliedes 49 oder ein anderer Bauteil kann als Kolben einer weiteren Fördereinheit 69 wirken, welcher über den gesamten Teilhub 52 ein Medium, insbesondere Luft, aus dem Inneren des Zylinder- bzw. Hohkörpers 21 in Richtung 64 gegen die Innenseite der Wandung 28 austreibt, an welcher dieses Medium rechtwinklig quer zur Achse 10 zur Öffnung 7 bzw. einem gesonderten Austritt 68 ventilfrei umgelenkt wird. Der Austritt 68 ist durch dieselbe Öffnung wie der Auslaß 7 gebildet, von dieser durch das zugehörige Ende der Fläche 18 bzw. der Wandungen 26, 27 abgetrennt und quer zur Achse 10 schlitzförmig, wobei er mit dem Auslaß 7 gemeinsame Seitenbegrenzungen aufweisen kann. Das aus dem Austritt 68 austretende Medium fängt als Strömungsteppich das sich von der Fläche 18 ablösende Medium auf und verleiht ihm nach Verlassen des Auslasses 7 eine entsprechende stabilisierte Strömungsrichtung.

Am Ende des Hubes 51, 52 wird die Betätigung 63 freigegeben, so daß die Einheit 4 bzw. die Fördereinheiten 11 bis 13, 69 durch die Feder 25 wieder in ihre Ausgangslage zurückgeführt werden. Beim ersten Teil 52 dieses Rückhubes bleibt das Ventil 39 geschlossen und das Ventil 40 vollständig geöffnet, so daß auch in der Abgabestellung kein Medium durch die Öffnung 14 in die Kammer 15 nachfließen kann. Erst über den zweiten Teil 51 des Rückhubes nimmt die Einheit 4 den Körper 20 entgegen ihrer Arbeits-Hubrichtung 65 mit, wodurch das Ventil 39 geöffnet und das Ventil 40 geschlossen wird. Die zur Richtung 64 parallele sowie entgegengesetzte Hubrichtung 65 der Einheit 4 ist die Schließrichtung der Fläche 41 und die Öffnungsrichtung der Fläche 42.

Sofern nur wenige Einzeldosen des Mediums ausgetragen werden sollen, kann auch der Körper 6 den Speicher bilden und an seinem hinteren Ende mit einem Boden geschlossen sein. Sofern die Vorrichtung als Einmal-Dosierer zum Austrag nur einer einzigen Mediendosis vorgesehen sein soll, kann der Körper 6 und auch das Ventil 39 entfallen, die Kammer 15 an der Öffnung 14 durch die Stirnwand 29 o. dgl. geschlossen sein und der Körper 20 am Ende des Öffnungshubes des Ventiles 40 an diesem Verschluß, beispielsweise in der Ebene der Fläche 43, anschlagen. In diesem Fall kann auch die Feder 25 entfallen und die Feder 50 durch eine Schnapprastung o. dgl. ersetzt sein, welche die Teile 20, 21 über den Teilhub 51 gegeneinander lagesichert und dann durch den Betätigungsdruck diese Lagesicherung federnd abrupt freigibt.

Für die Montage wird der einteilige Körper 6, 70 axial in Richtung 64 bzw. nach vorne in den Körper 23 eingesetzt, wobei er mit den Körpern 20, 38 bereits vormontiert sein kann. Auch diese Körper 20, 38 werden in Richtung 64 in den Körper 6, 70 eingesetzt. Der Schaftkörper 19 wird, nach Vormontage mit dem Körper 49 und ggf. dem Körper 50 in Richtung 64 in den Körper 22, 28, 56 eingesetzt, wonach diese vormontierte Einheit in Richtung 65 in die Körper 23, 70, 20 eingesetzt wird. Auch der Körper 69 wird in dieser Richtung 65 in den Schaftkörper 19 eingesetzt.

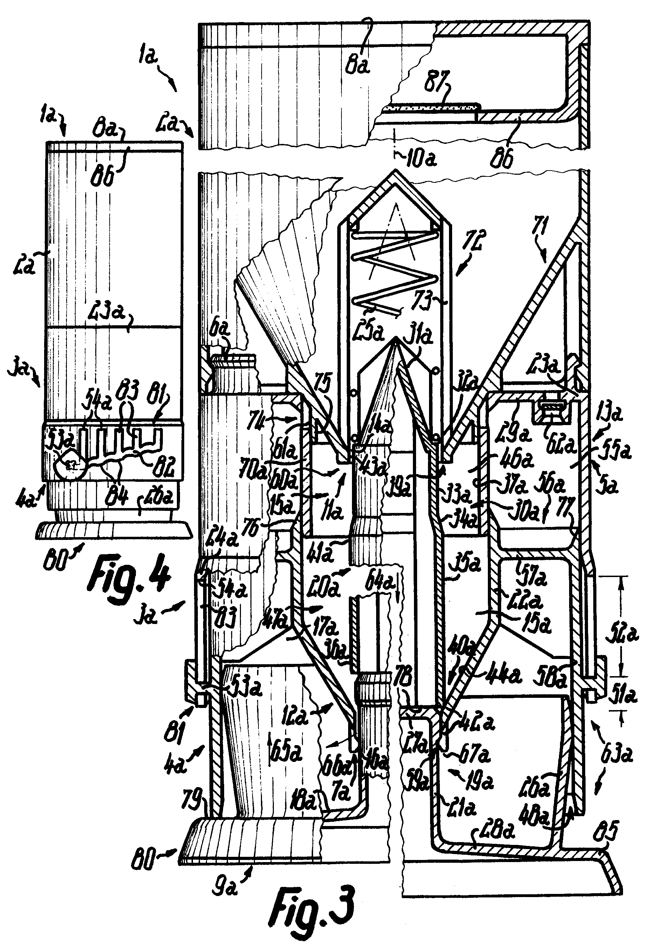

In den Figuren 3 und 4 sind für einander entsprechende Teile die gleichen Bezugszeichen wie in den Figuren 1 und 2, jedoch mit dem Index "a" verwendet. Alle Merkmale beider Ausführungsformen können jeweils ebenfalls an der anderen Ausführungsform additiv oder kombinativ vorgesehen sein, wobei auch eine Austragvorrichtung als Einheit denkbar ist, welche beide Ausführungsformen axial aneinanderschließend oder achsparallel nebeneinander enthält. Die Beschreibung der Ausführungsformen gilt sinngemäß für alle Ausführungsformen.

Gemäß den Figuren 3 und 4 ist der Speicher 2a als Körper aus Kunststoff unmittelbar mit der Einheit 3a, z.B. durch eine Schnappverbindung 6a, so verbunden, daß die gleich weiten Außenumfänge des Speichers 2a und der Einheit 3a kontinuierlich und lückenfrei ineinander übergehen. Vom Innenumfang des Außenmantels des Speichers 2a und mit Abstand von beiden Enden dieses Außenmantels geht einteilig ein in Richtung 64a spitzwinklig sowie kontinuierlich verengter Trichter 71 aus, dessen unteres Ende die kurze, zylindrische Durchgangsöffnung 14a begrenzt, welche gleichzeitig die Schließfläche 43a des Schieberventiles 39a bildet. Von der Öffnung 14a steht in Richtung 65a ein Vorsprung, wie ein einteilig mit dem Trichter 71 ausgebildeter Rohrstutzen 72, frei in den gesamten Trichter 71 vor. Der Rohrmantel des Stutzens 72 ist mit mehreren über seinen Umfang verteilten sowie über seine gesamte Länge reichenden Durchbrüchen bzw. axialschlitzförmigen Durchtritten 73 versehen, durch welche das Medium aus dem im Querschnitt ringförmigen Trichterraum radial nach innen in den Stutzen 72 unter Gewichtskraft einströmen kann. Das obere Ende des Stutzens 72 ist verschlossen und bildet eine schräge bzw. spitze und konische Leitfläche, welche das Medium von der Achse 10a weg an den Außenumfang des Stutzens 72 und daher in die Durchtritte 73 bzw. gegen die Trichterfläche 71 gleichmäßig über den gesamten Umfang leitet.

Der Körper 20a reicht in der Ausgangsstellung bis etwa über die Hälfte seiner Länge in den stationären Stutzen 72 hinein und bildet die spitzwinklige Leitfläche 31a, die in Ausgangsstellung vollständig innerhalb des Stutzens 72 sowie über ihre gesamte Länge im Bereich der bis an die Öffnung 14a reichenden Durchtritte 73 liegt. Die Kante 32a ist hier durch eine an das erweiterte Ende der Leitfläche 31a unmittelbar im Winkel anschließende Schulterfläche gebildet und liegt in Ausgangsstellung unmittelbar benachbart zur sowie stromaufwärts von der Öffnung 14a im Bereich der zugehörigen Enden der Durchtritte 73 und der Trichterfläche. Die Öffnung 14a weist über ihre Länge konstante Innen- und Außenquerschnitte auf, wobei hier der Abschnitt 33a die radial innere Begrenzung der Öffnung 14a bildet.

Der Trichter 71 ragt mit seinem engeren Ende in Richtung 64a frei in die Kammer 15a, so daß die Öffnung 14a wie das Ventil 39a auch mit Abstand vom stromaufwärts liegenden Ende der Kammer 15a angeordnet ist. Die genannte Schulterfläche dient zur Abstützung des unteren Endes der einzigen Feder 25a, die stets vollständig innerhalb des Stutzens 72 liegt, dort bei ihren Federbewegungen entlang der Innenseite der Durchtritte 73 das Medium auflockert und mit ihrem oberen Ende an der oberen Stirnwand des Stutzens 72 abgestützt ist. Der Körper 20a erreicht am Ende des Arbeitshubes diese Stirnwand nicht, ragt jedoch mit der Leitfläche 31a in sie hinein.

Die Kammer 15a ist hier dadurch kontinuierlich volumenveränderbar, daß sie bei durchgehend konstant bleibender Weite axial verkürzbar ist. Der untere Längsabschnitt der Kammer 15a, der Medienauslaß 7a, die Schließfläche 44a und die Kammer 47a sind durch den Mantel 42a der Einheit 4 gebildet und bewegen sich beim Arbeitshub gleichlaufend in Richtung 65a. Zu diesem Zweck ist am oberen, mit Abstand oberhalb der Stirnwand 57a liegenden Ende des Mantels 22a eine mit diesem einteilige Kolbenlippe 76 vorgesehen, welche abgedichtet am Außenumfang des Mantels 70a läuft. Sie dichtet die beiden Kammern 15a, 55a als Gleitdichtung gegeneinander ab. Eine entsprechende, über die Stirnwand 57a nach oben vorstehende Kolbenlippe 77 des Kolbens 56a gleitet am Innenumfang des Mantels 24a. Diese Kammern 15a, 55a werden daher mit dem Arbeitshub gleichlaufend verkleinert. Der frei nach unten ragende Mantel 70a schließt an die Stirnwand 29a an, von deren vollständig von dem Speicher 2a abgedeckten Außenseite die axial wirkenden Schnappglieder 6a abstehen. An dieser Außenseite ist der Trichter 71 mit einem Ringvorsprung abgedichtet abgestützt ist.

In der Ausgangsstellung liegt die Leitfläche 34a sowie die unmittelbar an sie anschließende Schließfläche 41a mit Abstand unterhalb der Gegenfläche 43a. Die Schließfläche 41a ist durch die Kammerfläche 35a gebildet, welche über den gesamten zugehörigen Hubweg bzw. bis zum unteren Ende 36a des Körpers 20a mit konstanter Weite durchgeht und nach Erreichen der Gegenfläche 43a das Ventil 39a über den restlichen Hubweg geschlossen hält. Die Mündungen 61a liegen im obersten Bereich der Kammer 15a oberhalb der Öffnung 14a und sind mit einem druckabhängig arbeitenden Ventil 74 verschlossen, dessen ring- oder mantelförmiger Ventilkörper 75 einteilig mit dem Trichter 71 ausgebildet ist. Der Ventilkörper 75 steht in Richtung 64a frei vom Außenumfang des Trichters 71 axial ab, ist in sich federelastisch und liegt so am Innenumfang 37a des Mantels 70a an, daß er die Mündungen 61a überdeckt. Bei Überdruck in der Kammer 55a wird der Ventilkörper 75 federnd radial sowie konisch nach innen verengt und die Luft strömt unmittelbar unterhalb der Öffnung 14a gegen den Außenumfang 33a, 34a, 35a.

Der in der Achse 10 liegende, ringförmige Auslaß 7a ist hier durch das untere Ende des Mantels 70a, 22a gebildet und fällt daher mit dem Auslauf 16a zusammen. Das untere Ende des Mantels 22a ist hierfür mit über den Umfang verteilten, schlitzförmigen Austrittsöffnungen versehen, welche bis zur unteren Endkante 67a des Mantels 22a reichen. Dieses, eine zylindrische Fortsetzung der Trichterfläche 44a bildende Ende bildet Schnappglieder der Abziehsicherung 59a, welche hier für einen Mitnehmer 78 für den Körper 20a vorgesehen ist. Der Mitnehmer 78 ist durch das obere Ende des Schaftabschnittes 21a gebildet und fest mit einem Anschlag 79 verbunden, welcher erst am Ende des ersten Teilhubes 51a, nämlich nach vollständigem Öffnen des Ventiles 40a die Einheit 4a bzw. den Kammerteil 22a und den Kolben 56a mitnimmt.

Die Entleerung aus dem Auslaß 7a erfolgt hier in ein Auffanggefäß, nämlich einen Becher 80, welcher entgegen der Kraft der Schnappverbindung 59a vollständig von der Vorrichtung 1a in Richtung 64a abzunehmen und einteilig mit dem Abschnitt 21a, dem Mantel 26a, dem Boden 28a und dem Anschlag 79 ausgebildet ist. Der Becher 80 liegt mit dem Außenumfang seines Mantels 26a am Innenumfang des Mantels 58a gleitbar sowie abgedichtet an und über seinen Außenumfang steht der ringförmige Anschlag 79 vor, welcher der unteren Endfläche des Mantels 58a gegenüberliegt.

Am Beginn der Betätigung wird der das Betätigungsglied 9a bildende Becher 80 gegenüber der Einheit 4a und der Kammer 15a in Richtung 65a verschoben, wobei der Mitnehmer 78 den Körper 20a mitnimmt, so daß das Ventil 40a vollständig geöffnet, das Ventil 39a jedoch noch nicht geschlossen wird. Die einteilige Einheit 4a bildet somit eine Teleskopöffnung 48a für die einsteckbare sowie verschiebbare Aufnahme des Bechermantels 26a und des Schaftabschnittes 21a. Dieser weist an seinem oberen Ende als Schnappglied einen über seinen Außenumfang vorstehenden Ringbund auf, welcher zusätzlich zum unteren Ende 36a mit seinem Außenumfang eine Schließfläche 42a in Form einer Ventil-Schieberfläche bildet, die mit dem Innenumfang des unteren Endes des Mantels 22a einen weiteren Verschluß des Ventiles 40a bildet. Nach einem ersten Teil des Teilhubes 51a und nachdem das untere Ende 36a schon geöffnet hat, öffnet auch dieser Schiebeverschluß, so daß das Medium um den Schaftabschnitt 21a zwischen den Schnappgliedern in den Becher 80 direkt auf dessen Bodenfläche 18a strömen kann, welche stumpfwinklig konisch vom Stößelabschnitt 21a radial nach außen bis zum Mantel 26a abfällt und in derselben Ebene wie der Anschlag 79 liegt. Nunmehr ist der Anschlag 79 an der Einheit 4a angeschlagen und der zweite Teilhub 52a beginnt, so daß die Kammern 15, 55a jetzt erst verengt werden. Erst nach einer ersten Strecke des Teilhubes 52a schließt das Ventil 39a, wobei vorher und nachher die komprimierte Luft durch die Mündungen 61a hinter das aus der Öffnung 14a austretende Medium strömt und es beschleunigt bzw. vor sich her aus der Öffnung 7a, 16a drückt.

Nach Freigabe und Rückkehr der Austragvorrichtung 1a in die Ausgangslage wird der Becher 80 nach unten aus der Einheit 4a herausgezogen, so daß das in ihm enthaltene Medium ausgeschüttet werden kann. Zuvor ist der ringförmige Becherraum durch die Einheit 4a nach außen dicht verschlossen. Die untere Endfläche des Bechers 80 kann wie die Fläche 9 eine Stand- bzw. Betätigungsfläche 9a bilden, indem die Vorrichtung 1a mit der Fläche 9, 9a auf eine Tischfläche gestellt und dann die Einheit 3a zur Ausführung des Hubes nach unten gedrückt wird. Mehrere Ventile 62a sind hier an der Stirnwand 29a vorgesehen. Im Bereich der Flächen 33a, 34a ist der Querschnitt der Kammer 15a eher kleiner als im Bereich der Fläche 35a und des Endes 36a. Die Kammer 17a wird am unteren Ende von der Becherkammer gebildet. Die Fläche 9a ist durch einen teller- bzw. napfförmigen Fuß 85 gebildet, welcher über die Außenumfänge der Einheiten 2a, 3a, 4a radial vorsteht und dessen oben liegender Napfboden den Anschlag 79 sowie den Behälterboden 28a bildet, von welchem der Schaftabschnitt 21a einteilig nach oben so vorsteht, daß der Mitnehmer 78 unterhalb des oberen Endes des Mantels 26a liegt. Der Fuß 85 bildet gleichzeitig die Handhabe zum Herausziehen des Behälters 80.

Zur schrittweisen Veränderung desjenigen Volumens, das die Kammer 15a für die Füllung mit Medium als Dosiervolumen einnimmt, sind Stellmittel 81 vorgesehen, welche die Ausgangslage zwischen den beiden Einheiten 3a, 4a stufenlos so verändern, daß nur der Teilhub 52a verkürzt wird, die Vollöffnung des Ventiles 40a jedoch durch die dritte Schiebeeinheit 80 stets gegeben ist. Ein einteilig vom Mantel 58a radial nach außen abstehender Stellnocken 53a durchsetzt eine Schräg- bzw. Wendelführung 82 im unteren Ende des Mantels 24a, so daß gegenseitige Drehbewegungen der Einheiten 3a, 4a zwangsläufig formschlüssig zu gegenseitigen Axialverschiebungen führen. Von der Führung 82 gehen quer in Richtung 65a parallele Hubführungen 83 für den Nocken 53a aus, deren von der Führung 82 entfernte Enden die in gleicher Höhe liegenden Anschläge 54a für die stets gleiche Hubendstellung bilden, jedoch stufenweise unterschiedlich lang sind. Der jeweiligen Hubführung 83 gegenüberliegend bildet die Führung 82 jeweils eine Rast 84, in welcher der Nocken 53a in der Ausgangsstellung durch die Feder 25a gegen Bewegungen entlang der Führung 82, nicht jedoch gegen Hubbewegungen so festgelegt ist, daß eine entsprechend große Drehkraft die Rastkraft überwindet. Seitlich benachbart zur längsten Hubführung 83 geht von der unteren Endkante des Mantels 24a eine Montage-Einführöffnung aus, welche bei der Montage federnd aufweitet und dann schnappend zurückspringt, so daß sie als formschlüssige Abzugsicherung für die Verbindung zwischen den beiden Einheiten 3a, 4a dient.

An diesem Anfang der Führung 82 ist der Nocken 53a in beiden Richtungen 64a, 65a durch Anschlag festgelegt und gegen Drehbewegungen in Richtung zum anderen Ende der Führung 82 durch eine federnd nachgebende Rast, beispielsweise einen Nocken des Mantels 24a gesichert. In dieser Anfangsstellung der Stellmittel 81 sind somit die Einheiten 2a, 3a gegen gegenseitiges Verschieben in den beiden genannten Richtungen formschlüssig gesichert. Am Außenumfang des Mantels 24a liegt eine einteilig mit dem Nocken 43a ausgebildete Handhabe zur manuellen Verdrehung der Einheit 4a gegenüber der Einheit 3a.

In der arretierten Stellung kann die Austragvorrichtung 1a auch mit einer Kindersicherung gegen unbefugte Benutzung gesichert sein. Z.B. kann der Nocken 53a zwei in seiner radialen Längsrichtung aneinander schließende Abschnitte unterschiedlicher Weite aufweisen, von denen nur der bei der Handhabe liegende Abschnitt zur Überwindung der Drehrast geeignet ist und bei unbetätigter Handhabe radial außerhalb dieser Drehrast liegt. Nur durch radial nach innen gerichteten Druck auf die Handhabe kann dieser Nockenabschnitt in den Bereich der Drehrast gebracht und dann in die Führung 82 überführt werden. Die Sicherung wirkt noch besser, wenn zwei gleichartige, einander diametral gegenüberliegende Handhaben für die Kurvensteuerung 81 vorgesehen sind und zur Entriegelung beide gleichzeitig gegeneinander gedrückt werden müssen.

Der Speicher 2a ist am oberen Ende mit einem zu öffnenden Deckel 86 dicht verschlossen, so daß er jederzeit nachgefüllt werden kann. Dieser Deckel 86, der die Handhabe 8a bildet, weist im Inneren eine nach außen dicht geschlossene Kammer auf, die mit einem Trocken- bzw. Adsorptionsmittel gefüllt und nur über ein feuchtigkeits- und gasdurchlässiges Trennglied 87 mit der Speicherkammer verbunden ist. Das Trennglied 87 kann die einzige Füllöffnung dieser Kammer verschließen und eine Scheibe bzw. ein Filter sein, welcher für das Medium undurchlässig ist. Dadurch ist das Medium, insbesondere im Falle von Trockenmedium, gegen Feuchtigkeit geschützt.

Alle angegebenen Merkmale, Eigenschaften und Wirkungen können genau oder nur im wesentlichen bzw. etwa wie erläutert und je nach den Eigenschaften der Medien auch stark davon abweichend vorgesehen sein. Durch die das Strömen des Mediums beschleunigende Luft werden sämtliche Förderwege vom Medium gesäubert, wodurch sehr enge Dosiertoleranzen eingehalten werden können. Dies kann noch weiter dadurch verbessert werden, daß die Begrenzungsflächen der Medienräume 7, 7a und 14, 14a bis 17, 17a sowie die Leitfläche 18 oder das Innere des Bechers 80, nämlich alle Flächen, welche mit dem Medium in Berührung kommen, mit einer Beschichtung versehen sind, welche als Antihaft- bzw. antistatische Oberfläche aus Metall und/oder Kunststoff, wie Tetrafluorethylen, wirkt. Dadurch kann ein Anhaften des Mediums durch elektrostatische Aufladung o. dgl. vermieden werden. Die Beschichtung ist nur wenige µm dünn und kann durch Lackieren, Kleben, Prägen, Drucken o. dgl. auf die Flächen aufgetragen sein.

## Patentansprüche

1. Austragvorrichtung für Medien mit einem Grundkörper (5) zur Verbindung mit einem Medienspeicher (2) o. dgl., dadurch gekennzeichnet, daß eine an wenigstens eine Durchgangsöffnung (14, 16) für das Medium angrenzende Medienkammer (15) vorgesehen ist, die wie die Durchgangsöffnung (14, 16) einen Medienraum begrenzt und eine Strömungsrichtung (64) bestimmt, und/oder daß eine Austragbetätigung (63) zur Abgabe des Mediums aus einem Medienauslaß (7) in einer als Abgabestellung vorgesehenen Raumlage der Austragvorrichtung (1) vorgesehen ist, daß insbesondere eine Fördereinheit (13) für ein Zweitmedium, wie ein flüchtiges Medium, vorgesehen ist, und daß vorzugsweise Förderwege (14 bis 18, 7) zum Durchtritt des Mediums durch wenigstens einen der Medienräume im wesentlichen unter Gewichtskraft und durch Gefälle vorgesehen sind.

2. Austragvorrichtung nach Anspruch 1, dadurch gekennzeichnet, daß die Förderwege zur Überführung des Mediums in die Medienkammer (15) hinein und aus der Medienkammer (15) heraus bzw. gesonderte Einlaß- und Auslaß-Durchgangsöffnungen (14, 16) sind und daß vorzugsweise in wenigstens einer Raumlage der Austragvorrichtung (1), wie in der Abgabestellung (Fig. 2), die Strömungsrichtungen (64) wenigstens zweier Medienräume (14 bis 17) im wesentlichen gleich gerichtet sind, daß insbesondere mindestens eine Durchgangsöffnung (14, 16) in ihrer Weite mit Steuermitteln (30) veränderbar bzw. der Durchgangsquerschnitt der Durchgangsöffnung (14, 16) von einer größten Weite stufenlos und annähernd bis zum vollständigen Verschluß veränderbar ist und daß vorzugsweise die Steuermittel (30) eine Zwangssteuerung bilden, welche bei Schließung einer Durchgangsöffnung (14, 16) die andere Durchgangsöffnung (16, 14) öffnet.

3. Austragvorrichtung nach Anspruch 1 oder 2, dadurch gekennzeichnet, daß mindestens einer der Medienräume (14 bis 17) mit der Austragbetätigung (63) wegabhängig zu schließen und zu öffnen ist und die Austragbetätigung (63) zwei manuell o.dgl. gegeneinander bewegbare Betätigungs-Einheiten (3, 4) aufweist, daß insbesondere eine erste Betätigungseinheit (3) ein Anschlußglied (6) zur Befestigung des Grundkörpers (5) an dem Medienspeicher (2) und die andere, zweite Betätigungs-Einheit (4) den Medienauslaß (7) aufweist, und vorzugsweise in der Abgabestellung (Fig. 2 und 3) die Strömungsrichtung (64) im wesentlichen linear aus dem Medienspeicher (2) durch die Medienkammer (15) bis zum Medienauslaß (7) nach unten gerichtet ist, die Einlaß-Durchgangsöffnung (14) unmittelbar an den Medienspeicher (2) sowie die Medienkammer (15) anschließt und gegenüber beiden wesentlich kürzer bzw. verengt ist bzw. daß mindestens einer der Medienräume (14 bis 17) im wesentlichen durchgehend ringförmig ist.

4. Austragvorrichtung nach einem der vorhergehenden Ansprüche, dadurch gekennzeichnet, daß mindestens ein gegenüber wenigstens einem der Medienräume (14 bis 17) mit der Austragbetätigung (63) o.dgl. bewegbarer Arbeitskörper (20) vorgesehen ist, der in wenigstens einem der Medienräume (14, 15) liegt und dessen radial innere Raumbegrenzung (31 bis 36) bildet, daß insbesondere der Arbeitskörper (20) als Steuerschieber gegenüber dem Grundkörper (5) bzw. dem Medienauslaß (7) bewegbar ist und mindestens einer der Medienräume (2, 14 bis 17) mit einem Schließkörper (31, 36) verschließbar ist, wobei zwei im Abstand voneinander liegende Schließkörper (31, 36) zur Durchführung einer Steuerbewegung in einer Arbeitsrichtung (64, 65) bewegbar und bei der Steuerbewegung zueinander im wesentlichen feststehend sind, und daß vorzugsweise der Schließkörper (31, 36) durch den im wesentlichen vollständig innerhalb der Medienkammer (15) liegenden Arbeitskörper (20) gebildet ist.

5. Austragvorrichtung nach einem der vorhergehenden Ansprüche, dadurch gekennzeichnet, daß mindestens einer der Medienräume (2, 14 bis 17) mit einem Schließsitz aus zwei Schließflächen (41, 43 bzw. 42, 44) verschließbar ist, von denen eine scharfkantig und an die andere als Gegenfläche (41, 44) anlegbar ist, wobei mindestens eine Gegenfläche (41, 44) keilförmig geneigt ist, daß insbesondere die Einlaß-Durchgangsöffnung (14) mit einer in Strömungsrichtung (64) erweiterten äußeren Gegenfläche (41) bzw. die Auslaß-Durchgangsöffnung (16) mit einer in Strömungsrichtung (64) verjüngten inneren Gegenfläche (44) und mindestens einer der Medienräume (2, 14 bis 17) unter Federkraft schließbar ist, und daß vorzugsweise die Einlaß-Durchgangsöffnung (14) und die Auslaß-Durchgangsöffnung (16) mit unterschiedlichen Schließkräften schließbar bzw. gesonderte Federn (25, 50) zum Schließen der Durchgangsöffnungen (14, 16) vorgesehen sind sowie annähernd achsgleich ineinander liegen.

6. Austragvorrichtung nach einem der vorhergehenden Ansprüche, dadurch gekennzeichnet, daß im Bereich einer Durchgangsöffnung (14) eine von deren Zentrum (10) schräg nach außen gegen eine Innenfläche (37, 43a) der Medienkammer (15) gerichtete Leitfläche (31, 81) vorgesehen ist, die wenigstens annähernd bis in den Medienspeicher (2) bzw. durch die Einlaß-Durchgangsöffnung (14) reicht, daß insbesondere die Leitfläche (31) innerhalb der Medienkammer (15) mit einer Abreißkante (32) für das Medium endet.

7. Austragvorrichtung nach einem der vorhergehenden Ansprüche, dadurch gekennzeichnet, daß ein längenveränderbarer Betätigungsschaft (19, 19a) vorgesehen ist und einen Arbeitskörper (20) in einer entgegen Strömungsrichtung (64) gerichteten Schließrichtung (65) federnd mitnimmt, wobei der Arbeitskörper (20) einen ersten Längsabschnitt des Betätigungsschaftes (19) bildet, dessen zweiter Längsabschnitt (21) mit der zweiten Betätigungseinheit (4) gemeinsam mit dem Arbeitskörper (20) sowie gesondert vom Arbeitskörper (20) bewegbar ist, daß insbesondere die Medienkammer (15) mit Abstand zwischen ihren Enden aneinanderschließende Längsabschnitte (45 bis 47) unterschiedlicher Durchlaßquerschnitte aufweist bzw. die Leitfläche (31) einen verengten ersten Durchlaßquerschnitt (32) begrenzt, an welchen in Strömungsrichtung (64) abgestuft ein erweiterter zweiter Durchlaßquerschnitt (33) anschließt, der in einen dritten Durchlaßquerschnitt (35) übergeht, welcher mindestens so groß wie der erste Durchlaßquerschnitt (32) ist und abgestuft an einen vierten Durchlaßquerschnitt (36) anschließt, der in Richtung zur Auslaß-Durchgangsöffnung (16) stetig verengt ist, und daß vorzugsweise mehrere Durchlaßquerschnitte (45, 32 bis 36) von einer im wesentlichen konstant weiten Innenumfangsfläche (37) der Medienkammer (15) begrenzt sind.

8. Austragvorrichtung nach einem der vorhergehenden Ansprüche, dadurch gekennzeichnet, daß der Medienauslaß (7) am Ende eines Auslaßkanales (17) vorgesehen ist, der die Medienkammer (15) als Fallkanal mit dem Medienauslaß (7) verbindet, bzw. im Querschnitt ringförmig ist und einen Durchlaßquerschnitt aufweist, welcher größer als der der stromaufwärts anschließenden Medienräume (2, 14 bis 16) ist, daß insbesondere der volumenveränderbare Fallkanal (17) am Ende von einer Schrägfläche (18) begrenzt ist, die im wesentlichen bis in den Medienauslaß (7) abfällt, und daß vorzugsweise Mittel (60) zur positiven, von außen einwirkenden Schubbelastung des in der Medienkammer (15) befindlichen Mediums in wenigstens einer zur Strömungsrichtung (64) etwa parallelen Treibrichtung (64, 65) vorgesehen sind und die Fördereinheit (13) bzw. den Arbeitskörper (20) umfassen und daß in die Medienkammer (15) mindestens eine Auslaßöffnung (61) für das Zweitmedium mündet, die näher bei der Einlaß-Durchgangsöffnung (14) als bei der Auslaß-Durchgangsöffnung (16) im Bereich eines erweiterten Durchlaßquerschnittes (33) der Medienkammer (15) liegt.

9. Austragvorrichtung nach einem der vorhergehenden Ansprüche, dadurch gekennzeichnet, daß die Medienkammer (15) eine stromaufwärts liegende, volumenveränderbare Vorkammer (45) sowie daran anschließend eine Portionierkammer (46) bildet und daß Mittel (60) zur Rückentleerung der Vorkammer (45) in den Speicher (2) gegen die Schwerkraft des Mediums vorgesehen sind bzw. zur Rückentleerung ein das Medium durch die Einlaß-Durchgangsöffnung (14) zurückdrückender Kolben (31) vorgesehen ist, daß insbesondere der Kolben (31) durch den Arbeitskörper (20) gebildet ist, dessen Leitfläche (31) die Schließfläche (41) bildet, und daß vorzugsweise die Medienkammer (15a) volumenveränderbar bzw. mit der Austragbetätigung (63a) axial kontinuierlich verkürzbar ist und/oder Stellmittel (81) zur Veränderung des Volumens der Medienkammer (15a) in der Ausgangsstellung vorgesehen sind.

10. Austragvorrichtung nach einem der vorhergehenden Ansprüche, dadurch gekennzeichnet, daß eine Druckkammer (55) der Fördereinheit (13) etwa parallel zur Achse (10) der Medienkammer (15) liegt und diese umgibt, daß insbesondere die Fördereinheit (13) simultan mit dem Medienaustrag betätigbar ist und daß vorzugsweise ein Pumpkolben (56) der Fördereinheit (13) mit den Steuermitteln (30) verschiebbar ist.

11. Austragvorrichtung nach einem der vorhergehenden Ansprüche, dadurch gekennzeichnet, daß an dem Grundkörper (5a) ein das Medium aus dem Medienauslaß (7a) unmittelbar aufnehmendes und von der Austragvorrichtung (1a) in gefülltem Zustand vollständig abnehmbares Auffanggefäß (80) vorgesehen ist, daß insbesondere das Auffanggefäß (80) ein freiliegendes Betätigungsglied (9a) der Austragbetätigung (63a) bildet und daß vorzugsweise ein Längsabschnitt (21a) des Betätigungsschaftes (19a) durch das Auffanggefäß (80) gebildet ist sowie den Medienauslaß (7a) durchsetzt.
